# EUROPEAN PATENT SPECIFICATION

(11) **EP 4 300 270 B1**
(45) Date of publication and mention of the grant of the patent: **02.09.2026**
(21) Application number: 22182646.4
(22) Date of filing: 01.07.2022
(51) Int. Cl.: G06F 3/0354, G06F 3/03

(54) **OPTICAL SYSTEM FOR A POSITION DETERMINATION DEVICE**
OPTISCHES SYSTEM FÜR EINE POSITIONSBESTIMMUNGSVORRICHTUNG
SYSTÈME OPTIQUE POUR UN DISPOSITIF DE DÉTERMINATION DE POSITION

(43) Date of publication of application: 03.01.2024
(73) Proprietor: Freshape SA, 1020 Renens (CH)
(72) Inventor: Unuchek, Dmitrii, 1690 Villaz-St-Pierre (CH); Cuccato, Nicola, 1690 Villaz-St-Pierre (CH); Malcom, Thomas, 1690 Villaz-St-Pierre (CH)
(74) Representative: ABREMA SA

(56) References cited:
- WO-A1-2022/064412
- US-A1- 2010 085 471

## Description

### Field of the invention

The present invention relates to an optical system for a position determination device such as an optical stylus for determining the position of the device relative to a position-encoded surface. The invention further relates to a method for controlling the voltage to be applied on a dynamic optical element of the position determination device as a function of the working distance of the device relative to the position-encoded surface.

### Description of related art

Among user input devices, touch-sensitive displays provide the most natural way for human-computer interaction through simple gestures, signs or even hand-written text. In general, the use of a finger as an input device results in an imprecise outcome. Styli as position determination devices are widely used for more accurate data input.

However, independently of the technology used, most of the existing stylus have various limitations and require either physical contact or a very small separation between a pen and a screen. The scope of their applications therefore remains limited to rough graphical input within a two-dimensional plane.

A versatile optical stylus for 2D and 3D applications using an alternative approach to determine the object distance is disclosed in WO2022064412. The optical stylus described in this document is designed for a position determination device comprising a position-encoded surface having different position-encoded patterns. The optical stylus comprises an image sensor for capturing images of any position-encoded pattern of the position-encoded surface, and an optical arrangement comprising a dynamic optical element configured to be electrically actuated in order to adjust the focal length of the optical stylus as a function of a separation distance between a reference point of the optical stylus and the position of any position-encoded pattern to have a substantially in-focus position-encoded pattern corresponding to the position of the optical stylus.

The use of telecentric system comprising an object lens and an image lens arranged on both sides and at focal length from a stop aperture is known in machine vision application where parallax errors should be limited. Telecentric systems advantageously provides constant magnification for objects independently of the distance between the objects and the object lens. These systems have however a limited depth of field where objects form sharp in-focus images.

This issue can be solved by decreasing the diameter of the stop aperture in order to increase the depth of field at the expense of light collection capabilities thereby retrieving images with low illumination leading to lower contrast and higher noise levels. In addition, decreasing the diameter of the stop aperture introduces diffraction effects which limit the maximum achievable resolution of optical systems.

Optical systems consisting of a dynamic optical element have the advantage to increase the depth of field over conventional telecentric systems. However, the dynamical optical element shows poor performances at controlling magnification variation at different focal length unlike the conventional telecentric systems.

An aim of the present invention is therefore to propose an optical system with a dynamic optical element, for a position determination device, in particular an optical stylus, which can be focused on close and far objects while magnification remains within a control magnification range for close and far objects when the position determination device operates in a predefined range of working distances.

Another aim of the present disclosure is to propose a method for determining a working distance of a position determination device, in particular an optical stylus, relative to a position-encoded surface.

A further aim of the present invention is to propose a method for controlling the voltage to be applied on a dynamic optical element of a position determination device, in particular an optical stylus, as a function of the working distance of the device relative to the position-encoded surface.

### Brief description of the invention

These aims are achieved notably by an optical system for a position determination device, in particular an optical stylus, for determination of the position of said device relative to a position-encoded surface having different position-encoded patterns. The optical system comprises an image sensor for capturing at least one image of any position-encoded pattern of the position-encoded surface, one or more light sources for illuminating any of said position-encoded patterns, a stop aperture, an object lens with a side positioned away from the stop aperture by a first distance and an image lens with a side positioned away from the stop aperture by a second distance. The optical system further comprises a dynamic optical element positioned in contact with the stop aperture or within a distance of 5mm away from the stop aperture along the optical axis of the optical system. The dynamic optical element is configured to be electrically actuated in order to form onto the image sensor in-focus images of any position-encoded pattern of the position-encoded surface within working distances of the position determination device comprising said optical system.

In an embodiment, the range of said working distances has a minimum value of 10mm and a maximum value of 100mm.

In an embodiment, the ratio of magnification of the optical system between in-focus image formed or projected onto the image sensor, when the position determination device is at the minimum and maximum values of the range working distances, is below 3.

According to the invention, the first distance is within a range from 0.5 to 1.2 of the focal length of the object lens.

In an embodiment, the optical system is a double telecentric system, wherein the first distance is equal to the focal length of the object lens whereas the second distance is equal to the focal length of the image lens.

In an embodiment, the optical system is of the type of an object-space telecentric system, wherein the first distance is equal to the focal length of the object lens.

In an embodiment, the first distance is shorter than the focal length of the object lens while the second distance is shorter than the focal length of the image lens.

In an embodiment, the first distance is at least one and a half times shorter than the focal length of the object lens while the second distance is at least two times shorter than the focal length of the image lens.

In an embodiment, the optical system further comprises a circuit board. The dynamic optical element is an electrotuneable lens, for example liquid or polymer lens, which is mounted on a side of the circuit board. The circuit board comprises the stop aperture.

In an embodiment, the optical system further comprises a distance measurement sensor, for example an optical time-of-flight sensor, mounted between the dynamic optical element and the object lens.

In an embodiment, the optical system further comprises an optical filter arranged to allow the passage of the light emitted by the light sources to reach the image sensor and to prevent the light emitted by the distance measurement sensor from reaching the image sensor or at least attenuate this light before reaching the image sensor.

In an embodiment, the optical filter is in the form of a coating coated on the image lens.

In an embodiment, the one or more light sources is/are arranged such that the central axis of the light cone emitted by the or each light source intersects the optical axis of the object lens for optimal illumination intensity.

Another aspect of the invention relates to an optical stylus comprising the optical system.

In an embodiment, the one or more light sources is/are mounted between the dynamic optical element and a distal end of the optical stylus, preferably between the dynamic optical element and the object lens.

In an embodiment, the optical stylus further comprises an ink chamber.

Another aspect of the disclosure relates to a method for determining a working distance of an optical stylus as a function of the 3D pose of the optical stylus relative to a position-encoded surface comprising position-encoded patterns. The optical stylus comprises an image sensor for capturing at least one image of any position-encoded pattern of the position-encoded surface; an object lens and an image lens arranged on both sides of a stop aperture; a dynamic optical element mounted between the object lens and the image lens and configured to be electrically actuated in order to form onto the image sensor in-focus images of any position-encoded pattern of the position-encoded surface within a range of working distances along the optical axis of the stylus; a distance measurement sensor, for example an optical Time-of-Flight sensor, for measuring said working distance; and a processing unit to control the dynamic optical element as a function of said working distance.

The processing unit corrects in real time the signal acquired by the distance measurement sensor as a function of the tilt angle and the roll angle of the 3D pose of the optical stylus relative to the position-encoded surface to compute the working distance.

In an embodiment, the tilt and roll angles of the 3D pose of the optical stylus relative to the position-encoded surface are obtained from an Inertial Measurement Unit - IMU, or from an algorithm based on the perspective distortion of the image of the position-encoded pattern as captured by the image sensor, or by using the data obtained by both the IMU and the algorithm.

In an embodiment, the working distance of the optical stylus is obtained by executing by the processing unit the following equation: $WD = \left({D}_{M}⋅\frac{r}{\sqrt{{r}^{2} + {L}_{o}^{2}}}-r\right) \left(\frac{Lo}{r}+cosψ⋅tanφ\right)$ wherein
D_{M} is the distance measured by the distance measurement sensor,
*Lo* is the distance between the distance measurement sensor and the outer surface of the object lens along the optical axis of the stylus,
*r is* the orthogonal distance between the optical axis of the stylus and the position of the distance measurement sensor, and
φ and ψ are respectively the tilt and the roll angles of the optical stylus.

In an embodiment, the distance between the position-encoded surface and the distal end of the optical stylus, along an axis parallel to the optical axis, is obtained by executing by the processing unit the following equation: ${D}^{tip} = \left({D}_{M}⋅\frac{r}{\sqrt{{r}^{2} + {L}_{o}^{2}}}-r\right) \left(\frac{{L}_{0}}{r}+cosψ⋅tanφ\right) - {L}_{tip} + R ⋅ cos ψ ⋅ tan φ$ wherein
D_{M} is the distance measured by the distance measurement sensor,
*Lo* is the distance between the distance measurement sensor and the object lens along the optical axis of the stylus,
*r* is the orthogonal distance between the optical axis of the stylus and the position of the distance measurement sensor,
φ and ψ are respectively the tilt and the roll angles of the optical stylus,
*Lₜᵢₚ* is the distance between the outer surface of the object lens and the distant end of the optical stylus along the optical axis of the stylus, and
R is the orthogonal distance between the optical axis *O* and the axis of the rod of the stylus.

In an embodiment, the closest distance between the position-encoded surface and the distal end of the optical stylus is obtained by executing by the processing unit the following equation: ${D}_{N}^{tip} = {D}^{tip} ⋅ cos φ$

Another aspect of the invention relates to a method for controlling the voltage to be applied on a dynamic optical element of an optical stylus as a function of the 3D pose of the optical stylus relative to a position-encoded surface comprising different position-encoded patterns. The optical stylus comprises: an image sensor for capturing at least one image of any position-encoded pattern of the position-encoded surface; a dynamic optical element configured to be electrically actuated in order to form onto the image sensor in-focus images of any position-encoded pattern of the position-encoded surface within a range of working distances of the optical stylus; a distance measurement sensor for measuring a distance, and a processing unit to control the dynamic optical element as a function of a working distance determined using said distance.

The method comprises the steps of: a. performing a measurement of said distance with the distance measurement sensor, and b. determining the electrical voltage to be applied on the dynamic optical element by means of a distance-to-voltage conversion model using either an analytical model describing the relation between the voltage to be applied and said working distance, or a look-up table storing the value of the voltage to be applied for any measurement of said working distance.

In an embodiment, the step a. of the method is followed by the additional steps of: c. obtaining at least one measurement performed by another sensor, such as the image sensor or an IMU sensor, included in the optical stylus, and d. running on the processing unit a sensor fusion algorithm, such as a Kalman filter, to obtain a more precise determination of said working distance as a function of the data obtained by the distance measurement sensor and said other sensor.

In an embodiment, the method comprises the additional steps of:
- determining by an image analysis algorithm whether the quality of one or more images acquired by the image sensor is/are above a given threshold to ensure that the image of the position-encoded pattern is good enough to be used by the optical stylus, and
- adapting the distance-to-voltage conversion model when the quality is below said given threshold to modify the focal length of the dynamic optical element so as to restore the quality of said one or more images above said given threshold.

### Brief Description of the Drawings

The invention will be better understood with the aid of the description of several embodiments given by way of examples and illustrated by the figures, in which:
- Figure 1a is a perspective view of an optical module of the optical system according to an embodiment;
- Figure 1b shows a cross-sectional perspective view of a part of an optical stylus comprising an optical system according to an embodiment;
- Figure 1c shows a side view of Figure 1b;
- Figure 2a shows a cross-sectional perspective view of a part of an optical stylus comprising an optical system according to another embodiment,
- Figure 2b shows a side view of Figure 2a,
- Figures 3a and 3b are schematic explanation views of the optical system, wherein opposite sides of the image lens comprise a coating with respectively an optical filter and an antireflective filter while the variable-focal-length lens and the object lens comprise each an antireflective coating according to an embodiment.
- Figure 4 shows a schematic view of an optical system of the type of a double telecentric system, comprising a lens with a variable focal length according to an embodiment;
- Figure 5 shows a schematic view of an optical system of the type of an object-space telecentric system, comprising a lens with a variable focal length according to another embodiment;
- Figure 6 shows a schematic view of a compact optical system, according to another embodiment, comprising a lens with a variable focal length, and designed to focus on close and far objects while magnification remains within a control magnification ratio;
- Figure 7 shows a schematic view of an optical system, according to another embodiment, whose optical axis is perpendicular to the surface of the position encoded surface and comprising both a distance measurement sensor and a light source arranged between the lens with a variable focal length and the object lens;
- Figure 7a shows a side view of an optical position determination device comprising a position-encoded surface and an optical stylus integrating the optical system of Figure 7 and whose optical axis is perpendicular to the surface of the position-encoded surface;
- Figure 8 shows a schematic view of an optical system, according to another embodiment, comprising a distance measurement sensor and a light source which are both arranged such that the central axis of the light cone emitted by both the distance measurement sensor and the light source intersect the optical axis of the system, and
- Figures 9a to 9c shows different views of the part of the optical stylus of Figures 1b and 1c and different geometrical parameters for correction of the signal acquired by a distance measurement sensor as a function of the working distance of the optical stylus relative to the position-encoded surface.

### Detailed description of several embodiments of the invention

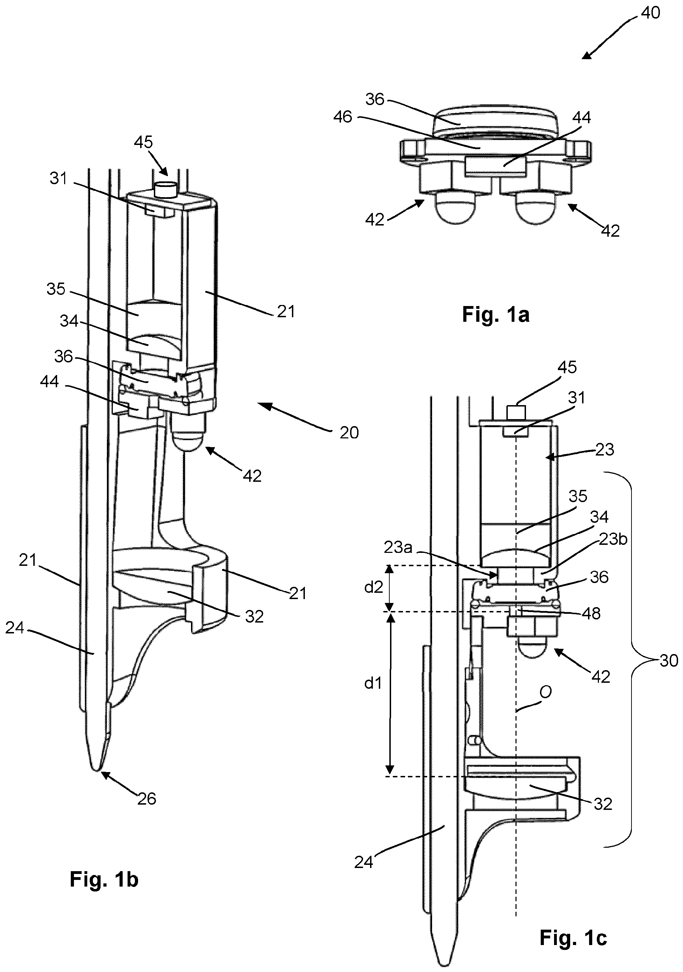

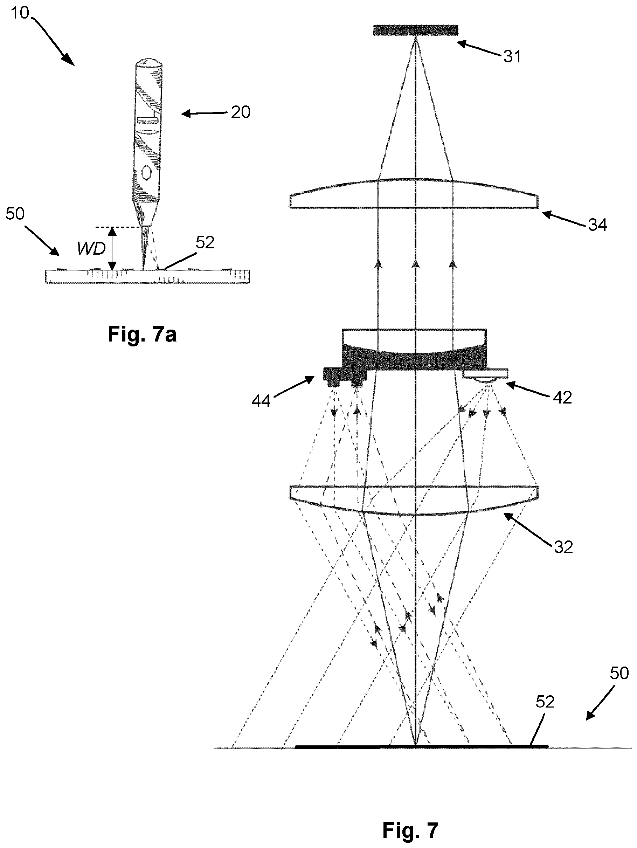

In a preferred embodiment, the position determination device is an optical stylus 20, as shown for example in Figures 1b and 1c. The optical stylus is configured to determine its 3D pose relative to a position-encoded surface 50 as shown in Figure 7a and as described in detail in WO2022/064412, the content of which is hereby incorporated by reference. Within the context of the present invention, the term "3D pose" of the optical stylus 20 shall be understood as a combination of (1) a two-dimensional coordinates of a reference point of the optical stylus relative to the position-encoded surface such as its distal end or tip 26, (2) a distance between the reference point of the optical stylus and the position-encoded surface and (3) orientation of the optical stylus relative to the position-encoded surface, wherein the orientation may be expressed in Euler angles, in yaw, pitch and roll angles, in quaternions or in rotation matrices.

In the embodiment shown in Figures 1a to 1c, the optical stylus 20 comprises a rod 24 and a housing 21 accommodating the rod 24. In an embodiment, the rod 24 may comprise an ink chamber for writing or drawing on a piece of paper in a conventional way. The optical stylus 20 comprises an optical system 30 mounted in the stylus housing 21 next to the stylus rod 24. The optical system 30 comprises an image sensor 31, an object lens 32 arranged on a first side of a stop aperture 48 and an image lens 34 arranged in a second side of the stop aperture opposite the first side. The image sensor 31 and the image lens 34 are arranged on a sensor chamber 23 of the stylus housing 21. The image lens 34 is mounted on a front side of the chamber 23 while the image sensor 31 is mounted on a rear side of the chamber 23 for capturing images of any position-encoded pattern 52 of the position-encoded surface 50 as shown in Figure 7a.

The image lens 34 is arranged against a shoulder 23b located on the front side of the sensor chamber 23. The optical system 30 further comprises an optical filter 35, as a stand-alone component, mounted against the image lens 34. The optical filter may be instead a lens coating as described below. The shoulder 23b surrounds a chamber opening 23a through which light can pass so as to travel through the image lens 34, the optical filter 35 and onto the image sensor 31. The function of the optical filter 35 will be described in detail subsequently.

The optical system 30 of the embodiment of Figures 1a-1c further comprises an optical module 40 mounted between the object lens 32 and the image lens 34. The optical module 40 comprises a circuit board 46 having a first side facing the image lens 34 and a second side facing the object lens 32. A dynamic optical element 36 is mounted against the first side of the circuit board 46 while one or more light sources 42, for example LEDs, are mounted on the second side of the circuit board 46. The circuit board 46 further comprises the stop aperture 48 which is aligned with the optical axis O of the optical system 30. The stop aperture may however be separated from the circuit board according to a variant.

The dynamic optical element 36 is preferably an electrotuneable lens, for example liquid or polymer lens, which is either in direct contact with the stop aperture 48 or within a distance of 5mm from the stop aperture.

The electrotuneable lens 36 is electrically connected to the circuit board 46 such that a voltage can be applied on electrotuneable lens 36 as a function of the working distance of the optical stylus 20 relative to a position-encoded surface 50 as described later. In the context of the present invention, the *"working distance WD"* of the optical stylus shall be understood as the distance, along the optical axis O of the optical system 30, between any position-encoded pattern 52 of the position-encoded surface 50, and the outer surface of the object lens 32 of the optical system.

Constant control of the voltage applied on the electrotuneable lens 36 ensures that any position-encoded pattern 52 is sharp enough within the range of working distances of the optical stylus 20. The working distance WD may vary between 10mm (when the distal end 26 of the stylus is in contact with the position encoded surface), and 100mm, preferably between 15mm and 65mm.

In the embodiment shown in Figures 1a to 1c, the optical module 40 comprises several LEDs 42 connected to the second side of the circuit board 46, for example three LEDs angularly offset from each other by approximately 120° around the stop aperture 48. The optical module 40 also comprises a distance measurement sensor, preferably an optical Time-of-Flight sensor 44 connected to the second side of the circuit board 46.

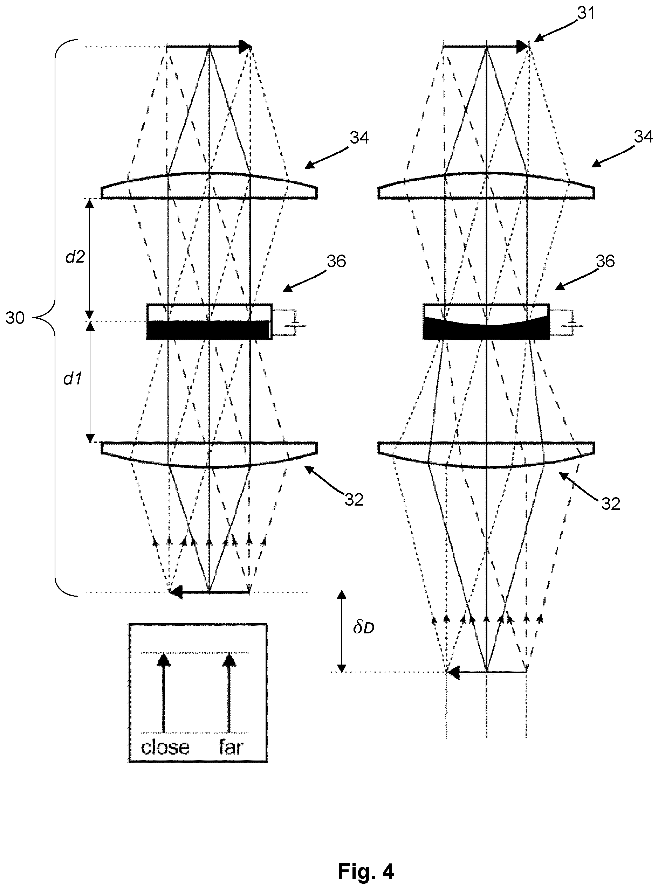

With reference to Figure 1c, a side of the object lens 32 of the optical system 30 is positioned away from the stop aperture 48 by a first distance d1, whereas a side of the image lens 34 is positioned away from the stop aperture by a second distance d2. The ratio between the first and second distances d1, d2 may vary according to the type of the optical system described below with references to Figures 4 to 6.

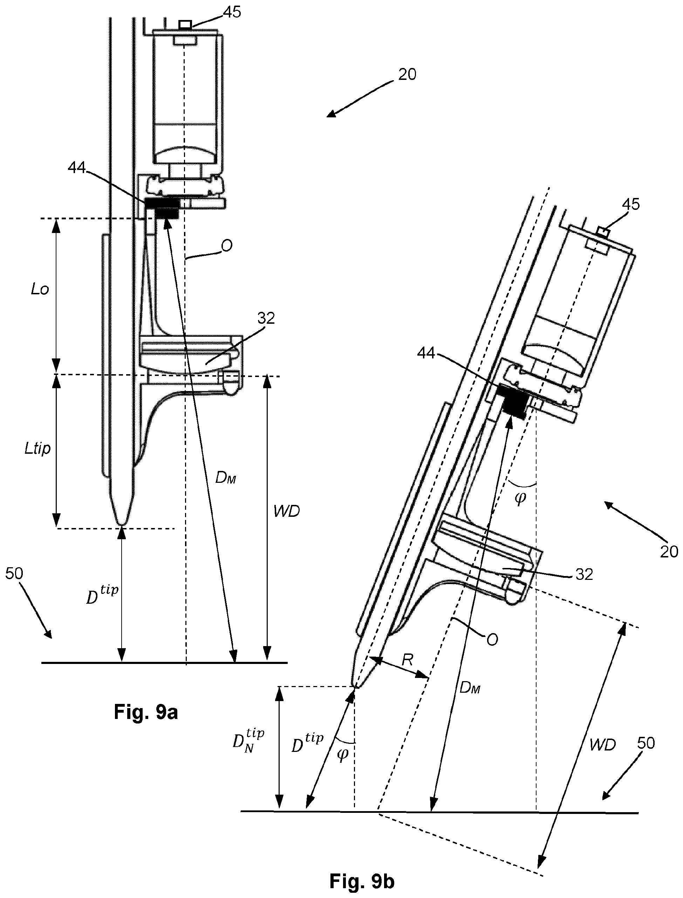

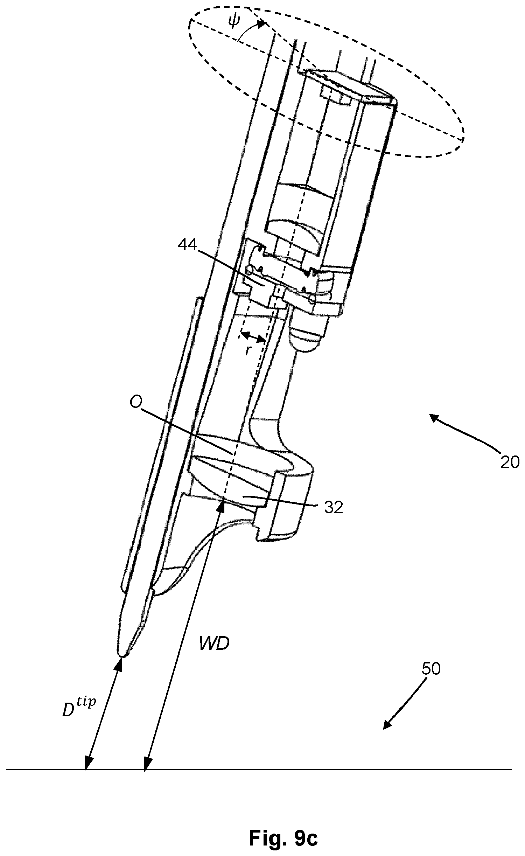

In an embodiment, the optical stylus 20 also comprises an Inertial Measurement Unit (IMU) 45 for measuring the tilt angle φ and the roll angle ψ of the optical stylus (Figures 9a to 9c).

In another embodiment, the tilt angle φ and the roll angle ψ of the optical stylus are computed by a positioning algorithm based on image analyses of the captured position-encoded pattern 52. In a further embodiment, the tilt angle φ and the roll angle ψ of the optical stylus are obtained by fusing the data measured by the IMU 45 with those acquired by the positioning algorithm in order to obtain more robust values for these angles.

The optical module 40 and the IMU are both in communication with a processing unit (not shown) of the optical stylus 20 in order to control the voltage to be applied on the electrotuneable lens 36 as a function of the output of the distance measurement sensor 44 as discussed thereafter in order to control the focal length of the electrotuneable lens 36 to ensure that the image of any position-encoded pattern 52 acquired by the image sensor 31 is sharp enough to be decoded by an image recognition algorithm. The image recognition algorithm may also be adapted to control in real-time the quality of the images acquired by the image sensor 31 so as to control the voltage to be applied electrotuneable lens 36 when the quality of these images is too poor to be decoded.

Position-encoded patterns 52 may be for example in form of tags encoding the X-Y two-dimensional coordinate grid or in the form of different patterns which can be decoded back to the coordinates of particular position on the position-encoded surface 50. As an alternative, position-encoded patterns 52 may be in form of unique tags or signs which can be univocally assigned to a particular position on the position-encoded surface 50. A look-up table comprising a series of corresponding unique tags or sign, and data relative to the position of each unique pattern or sign of the encoded surface, may be stored in a memory which may be integrated into the stylus housing 21 of the optical stylus or in a host device in communication with the optical stylus to receive unprocessed optical signal from the optical stylus corresponding to a unique tag or sign.

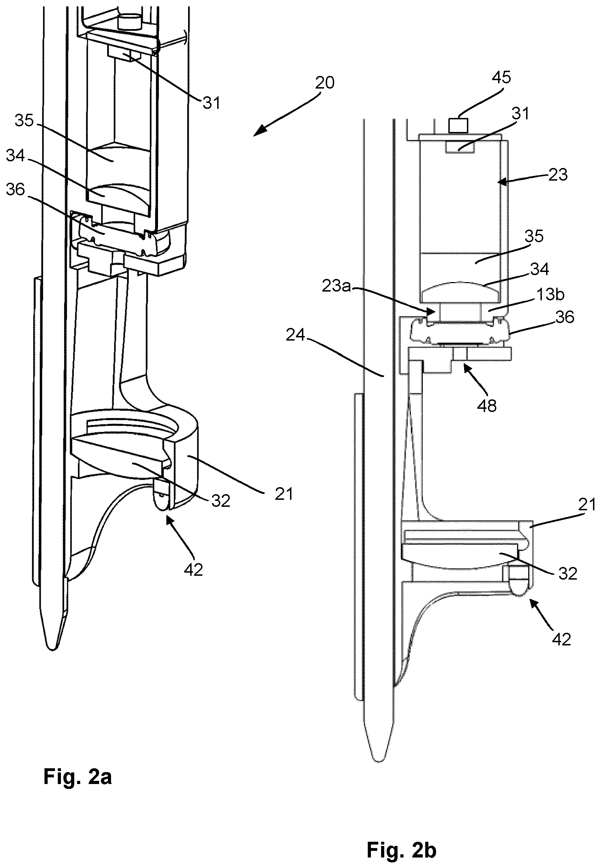

In the illustrated embodiment of Figures 2a, 2b, the optical stylus 20 is similar to the optical stylus of Figures 1b-1c, the only difference being the integration of the light sources at the level of the object lens 32. More particularly, several LEDs 42 are integrated in the stylus housing 21 surrounding the object lens 32, for example three LEDs offset from each other by approximately 120°.

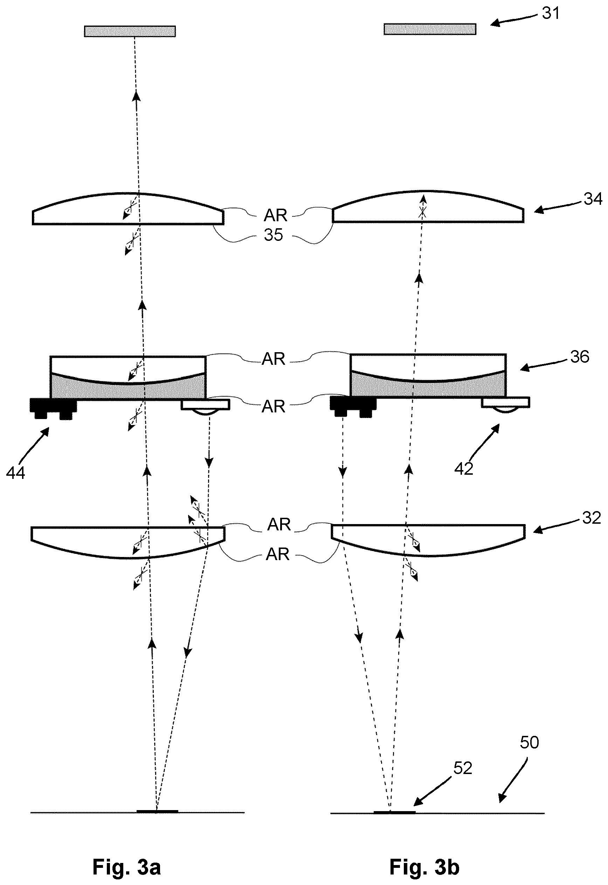

With reference to figures 3a and 3b, LEDs 42 emitting light invisible to the human eye are preferably chosen such as NIR LEDs with a wavelength ranging from 800 to 900nm, preferably around 850nm. The emitter of the optical Time-of-Flight sensor 44 generally sends photons at longer wavelengths exceeding 900nm, preferably around 940nm. With reference to Figure 3a, the light source emits light which passes through the object lens 32 into the position-encoded patterns 52 of the position-encoded surface 50. The light is then reflected/scattered on the surface 50 and sent back through the object lens 32, and passes through the electrotuneable lens 36, the image lens 34 and onto the image sensor 31 which acquired the image of the position-encoded patterns 52.

In an embodiment, The object lens 32 and the electrotuneable lens 36 comprise each at least one antireflective coating AR to minimize reflections and improve transmission of light through these optical components for optimal contrast ratio of the image captured.

Referring now to Figure 3b, the photons sent by the Time-of-Flight sensor 44 pass through the object lens 32 onto the position-encoded patterns 52 of the position-encoded surface 50. The photons are then reflected/scattered on the surface 50 and sent back through the object lens 32, and a part of the photons are received by Time-of-Flight sensor 44 to measure the working distance *WD* as shown in Figures 9a-9c. Another part of the photons passes through the electrotuneable lens 36. These photons should however not reach the image sensor as they would degrade the quality of the acquired image which may prevent decoding of the position-encoded pattern.

Accordingly, the image lens 34 comprises a coating integrating an optical filter 35 adapted to prevent the photons emitted by the Time-of-Flight sensor 44 from reaching the image sensor 31 while allowing the passage of the light emitted by the LEDs 42 so that the image sensor can capture the image of the position-encoded pattern 52. The optical filter 35 may be a band pass filter, a short pass filter or combination of different filters.

Figures 4 to 6 show schematically different arrangement of the optical system 30 according to different embodiments.

In the embodiment of Figure 4, the optical system 30 is of the type of a double telecentric system comprising the dynamic optical element 36 at the level of the stop aperture (not shown). Accordingly, the first distance *d1* between the object lens 32 and the stop aperture is equal to the focal length of the object lens while the second distance *d2* between the image lens 34 and the stop aperture is equal to the focal length of the image lens. The optical system 30 according to this embodiment ensure the acquisition by the image sensor 31 of in-focus images of any position-encoded pattern 52 within a shift *δD* in the working distance *WD* by controlling in real-time the voltage applied on the electrotuneable lens 36 as a function of the shift *δD* thereby resulting in different optical powers of the electrotuneable lens 36.

As a result, the magnification of any position-encoded pattern 52 captured by the image sensor 31 remains constant within the shift *δD* in the working distance WD.

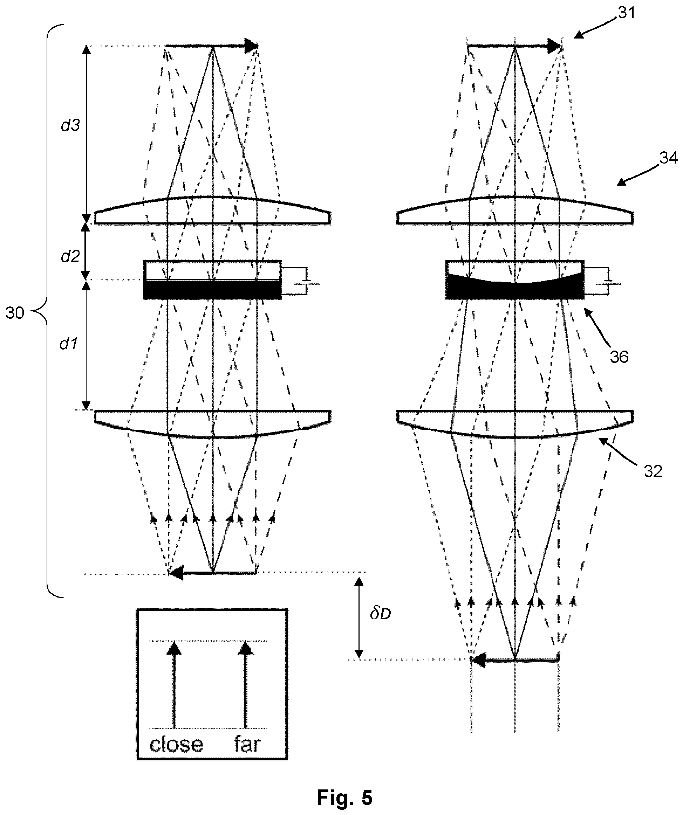

In the embodiment of Figure 5, the optical system 30 is of the type of an object-space telecentric system comprising the dynamic optical element 36 at the level of the stop aperture (not shown). The first distance *d1* between the object lens 32 and the stop aperture is therefore equal to the focal length of the object lens while the second distance *d2* between the image lens 34 and the stop aperture is smaller, for example two times smaller, than the focal length of the image lens 34.

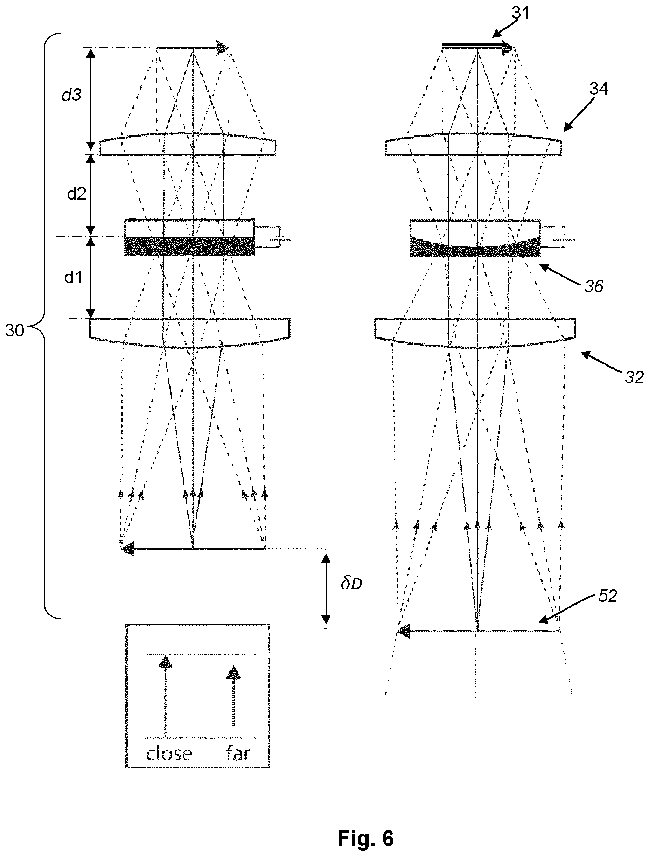

In the embodiment of Figure 6, the optical system 30 is a non-telecentric system comprising the dynamic optical element 36 at the level of the stop aperture (not shown). The first distance *d1* between the object lens 32 and the stop aperture is at least one and a half times shorter than the focal length of the object lens 32 while the second distance *d2* between the image lens 34 and the stop aperture is at least two times shorter than the focal length of the image lens. The optical system 30 according to this embodiment allows a limited relative change of the optical magnification of any position-encoded pattern within the shift *δD* in the working distance. This relative change remains under control and is for example less than 50% and preferably less than 30%. Minor variations of the optical magnification may advantageously be used for extracting information on the working distance *WD* of the optical stylus without affecting the readability of the position-encoded pattern.

In this embodiment, the distance d3 between the image lens 34 and the image sensor 31 is within a range from 0.8 to 1.2 of the focal length of the object lens 32.

Figure 7 shows the optical system 30 according to an embodiment, whereby the distance measurement sensor 44 and one or more light sources 42 are mounted between the electrotuneable lens 36 and the object lens 32. The optical system 30 is adapted to be integrated into an optical stylus 20 to be used with a position-encoded surface 50 as shown in Figure 7a. The position-encoded surface 50 comprises multiple position-encoded patterns 52 in order to detect the 3D pose of the stylus 20 relative to the surface 50.

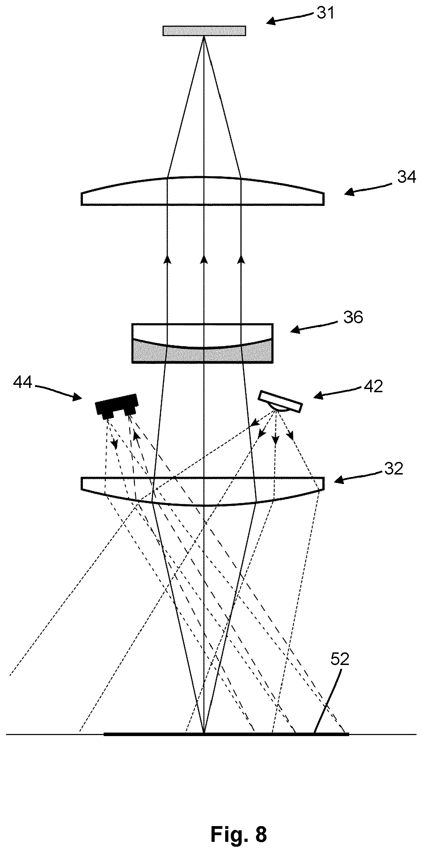

With reference to the embodiment of Figure 8, one or more light sources 42 are arranged such that the central axis of the light cone emitted by each light source intersects the optical axis of the object lens 32 for optimal illumination intensity. The distance measurement sensor 44 may also be arranged such that the central axis of the light cone emitted by the sensor 44 intersects the optical axis of the object lens 32. This allows the sensor to receive more photons to increase the robustness of the measurement.

The voltage to be applied on electrotuneable lens 36 of the optical stylus 20 is determined as a function of the 3D pose of the optical stylus 20 relative the position-encoded surface 50 comprising the position-encoded patterns 52. The output of the distance measurement sensor 44 may directly be used for applications where a coarse measurement of working distance *WD* is good enough.

For applications requiring a precise measurement of the working distance *WD* on the other hand, the output of the distance measurement sensor 44 must be corrected to take into consideration the geometrical constraint as shown in Figures 9a to 9c.

The processing unit of the optical stylus, when in use, corrects in real-time the signal acquired by the distance measurement sensor 44 as a function of the tilt angle φ and the roll angle ψ of the 3D pose of the optical stylus 20 relative to the position-encoded surface 50 in order to compute the working distance *WD.* The tilt and roll angles φ , ψ are either measured in real-time by the IMU 45 of the optical stylus, or computed by a positioning algorithm based on the captured image of a position-encoded pattern or by fusing the data from the IMU and the dated computed by the positioning algorithm.

More particularly, the working distance WD is obtained by executing by the processing unit the following equation: $WD = \left({D}_{M}⋅\frac{r}{\sqrt{{r}^{2} + {L}_{o}^{2}}}-r\right) \left(\frac{Lo}{r}+cosψ⋅tan φ\right)$ wherein
D_{M} is the distance measured by the distance measurement sensor 44,
*Lo* is the distance between the distance measurement sensor and the outer surface of the object lens 32 along the optical axis *O* of the stylus,
*r* is the orthogonal distance between the optical axis *O* of the stylus and the position of the distance measurement sensor 44, and
φ and ψ are respectively the tilt and the roll angles of the optical stylus.

In order to determine the working distance WD of the optical stylus 20, the distance value acquired by the measurement sensor 44 is corrected by applying the geometric constraint as described above. The electrical voltage to be applied on the electrotuneable lens 36 is determined by means of a distance-to-voltage conversion model using the corrected distance.

In an embodiment, the conversion model uses an analytical model describing the relation between the voltage to be applied on the electrotuneable lens 36 and the working distance *WD* computed by the processing unit of the optical stylus based on the output of the distance measurement sensor.

In another embodiment, the conversion model uses a look-up table storing values of the voltage to be applied on the electrotuneable lens 36 for any value of the working distance *WD* computed by the processing unit of the stylus.

In an embodiment, determinisation of the working distance *WD* in an accurate manner is a multi-steps process, comprising the following steps:
performing a coarse measurement of the working distance *WD* with the distance measurement sensor 44;
obtaining at least one measurement performed by one or more sensors, such as the image sensor 31 and/or the IMU 45 of the optical stylus 20, and
running on the processing unit a sensor fusion algorithm, such as a Kalman filter, to obtain a more precise measurement of the working distance *WD* as a function of the data obtained by the distance measurement sensor 44, the image sensor 31, and/or the IMU 45 of the optical stylus.

The processing unit of the optical stylus may run an image analysis algorithm to determine whether the quality of one or more images acquired by the image sensor is/are above a given quality threshold to ensure that the image of the position-encoded pattern is good enough to be used by the optical stylus. The "quality" of the acquired images may be linked to the following metrics: contrast, sharpness, entropy, and signal-to-noise ratio.

The quality of the images acquired by the image sensor may indeed vary over time because electrotuneable lens tend to deteriorate in the long run which has a negative repercussion on the flexibility of the lens. The voltage to be applied on the electrotuneable lens to obtain a given focal length may therefore vary with time.

The distance-to-voltage conversion model must therefore be adapted when the quality of the image acquired by the image sensor is below the quality threshold to modify the focal length of electrotuneable lens 36 so as the restore the quality of the images above the quality threshold in order to overcome possible degradation of the electrotuneable lens.

In some digital applications, the distance *D^{tip}* between the position-encoded surface 50 and the distal end or the tip 26 of the optical stylus 20, along an axis parallel to the optical axis *O,* is required to know for example when the user brings the stylus in contact with the position-encoded surface. This distance is obtained by executing by the processing unit the following equation: ${D}^{tip} = \left({D}_{M}⋅\frac{r}{\sqrt{{r}^{2} + {L}_{o}^{2}}}-r\right) \left(\frac{{L}_{0}}{r}+cos ψ⋅tan φ\right) - {L}_{tip} + R ⋅ cos ψ ⋅ tan φ$ wherein
D_{M} is the distance measured by the distance measurement sensor 44,
*Lo* is the distance between the distance measurement sensor and the outer surface of the object lens 32 along the optical axis *O* of the stylus,
*r* is the orthogonal distance between the optical axis *O* of the stylus and the position of the distance measurement sensor 44,
φ and ψ are respectively the tilt and the roll angles of the optical stylus,
*Lₜᵢₚ* is the distance between the outer surface of the object lens 32 and the tip of the stylus along the optical axis *O* of the stylus, and
R is the orthogonal distance between the optical axis *O* and the axis of the rod 24 of the stylus.

In other digital applications, the closest distance ${D}_{N}^{tip}$ from the distal end 26 of the optical stylus 20 may be required. For example, the Z-coordinate of the tip 26, which corresponds to the closest distance ${D}_{N}^{tip}$*,* is required for 3D design applications. This distance ${D}_{N}^{tip}$ may also be used to display the shadow following the movements of the optical stylus right under the tip. This distance is obtained by executing by the processing unit the following equation: ${D}_{N}^{tip} = {D}^{tip} ⋅ cos φ$

The invention described above is not limited to an optical stylus. The optical system may indeed be integrated into any device used for position determination.

### Reference list

Position determination device (e.g. optical stylus) 20
   Housing 21
   Sensor chamber 23
      Chamber opening 23a
      Shoulder 23b
   Rod 24
      Ink chamber 25
      Distal end 26
   Optical system 30
      Image sensor 31
      Object lens 32
         Antireflective coating AR
            Image lens 34
         Antireflective coating AR
      Optical filter 35
      Dynamic optical element 36
         Electrotuneable lens
         Antireflective coating AR
      Optical module 40
         Light sources 42
            e.g. LED
         Distance measurement sensor 44 (e.g. Time-of-flight sensor)
         IMU 45
         Circuit board 46
            Stop aperture 48

Position-encoded surface 50
   Position-encoded patterns 52
First distance d1
Second distance d2
Optical axis *O*
Working distance *WD*
Working distance shift *δD*
Tip distance *D^{Tip}*
Closest distance ${D}_{N}^{Tip}$

## Claims

1. Optical system (30) for a position determination device (20), in particular an optical stylus, for determination of the position of said device (20) relative to a position-encoded surface (50) having different position-encoded patterns (52), the optical system (30) comprising an image sensor (31) for capturing at least one image of any position-encoded pattern (52) of the position-encoded surface (50), one or more light sources (42) for illuminating any of said position-encoded patterns, a stop aperture (48), an object lens (32) with a side positioned away from the stop aperture by a first distance (*d1*) and an image lens (34) with a side positioned away from the stop aperture (48) by a second distance (*d2*), the optical system (30) further comprising a dynamic optical element (36) configured to be electrically actuated in order to form onto the image sensor (31) in-focus images of any position-encoded pattern (52) of the position-encoded surface (50) within working distances of the position determination device (20) comprising said optical system (30) **characterized in that** said dynamic optical element (36) is positioned in contact with the stop aperture (48) or within a distance of 5mm away from the stop aperture along the optical axis (O) of the optical system (30) and **in that** the first distance (*d1*) is within a range from 0.5 to 1.2 of the focal length of the object lens (32).

2. The optical system (30) according to claim 1, wherein the range of said working distances has a minimum value of 10mm and a maximum value of 100mm.

3. The optical system (30) according to claim 2, wherein the ratio of magnification of the optical system between in-focus image formed onto the image sensor (31), when the position determination device (20) is at the minimum and maximum values of said range, is below 3.

4. The optical system (30) according to any preceding claim, of the type of a double telecentric system, wherein said first distance (*d1*) is equal to the focal length of the object lens (32) whereas said second distance (*d2*) is equal to the focal length of the image lens (34).

5. The optical system (30) according to any of claims 1 to 3, wherein the optical system (30) is of the type of an object-space telecentric system, wherein said first distance (*d1*) is equal to the focal length of the object lens (32).

6. The optical system (30) according to any of claims 1 to 3, wherein said first distance (*d1*) is shorter than the focal length of the object lens (32), and wherein said second distance (*d2*) is shorter than the focal length of the image lens (34).

7. The optical system (30) according to claim 6, wherein said first distance (*d1*) is at least one and a half times shorter than the focal length of the object lens (32) and wherein said second distance (*d2*) is at least two times shorter than the focal length of the image lens (34).

8. The optical system (30) according to any preceding claim, further comprising a circuit board (46), wherein the dynamic optical element (36) is an electrotuneable lens, ETL, for example liquid or polymer lens, which is mounted on a side of the circuit board (46), said circuit board comprising the stop aperture (48).

9. The optical system (30) according to any preceding claim, further comprising a distance measurement sensor (44), for example an optical time-of-flight sensor, mounted between the dynamic optical element (36) and the object lens (32).

10. The optical system (30) according to the preceding claim, further comprising an optical filter (35) arranged to allow the passage of the light emitted by the light sources to reach the image sensor (31) and to prevent the light emitted by the distance measurement sensor (44) from reaching the image sensor (31) or at least attenuate said light before reaching the image sensor.

11. The optical system (30) according to any preceding claim, wherein the one or more light sources (42) is/are arranged such that the central axis of the light cone emitted by the or each light source intersects the optical axis (*O*) of the object lens (32) for optimal illumination intensity.

12. Optical stylus (20) comprising the optical system (30) according to any preceding claim.

13. The optical stylus (20) according to the preceding claim, wherein said one or more light sources (42) is/are mounted between said dynamic optical element (36) and the object lens (32).

14. Method for controlling the voltage to be applied on a dynamic optical element (36) of an optical stylus (20) as a function of the 3D pose of the optical stylus (20) relative to a position-encoded surface (50) comprising different position-encoded patterns (52), the optical stylus comprising:
- an image sensor (31) for capturing at least one image of any position-encoded pattern (52) of the position-encoded surface (50),
- a dynamic optical element (36) configured to be electrically actuated in order to form onto the image sensor (31) in-focus images of any position-encoded pattern (52) of the position-encoded surface (50) within a range of working distances of the optical stylus,
- a distance measurement sensor (44) for measuring a distance (D_{M}), and
- a processing unit to control the dynamic optical element (36) as a function of a working distance (WD) determined using said distance (D_{M}),
wherein the method comprises the steps of:
a. performing a measurement of said distance (D_{M}) with the distance measurement sensor (44);
b. determining the electrical voltage to be applied on the dynamic optical element (36) by means of a distance-to-voltage conversion model using either:
- an analytical model describing the relation between the voltage to be applied and said working distance (*WD*), or
- a look-up table storing the value of the voltage to be applied for any measurement of said working distance (*WD*).

15. The method according to the preceding claim, wherein step a. is followed by the additional steps of:
c. obtaining at least one measurement performed by another sensor, such as the image sensor (31) or an IMU sensor (45), included in the optical stylus, and
d. running on the processing unit a sensor fusion algorithm, such as a Kalman filter, to obtain a more precise determination of said working distance (*WD*) as a function of the data obtained by the distance measurement sensor (44) and said other sensor.

16. The method according to claim 14 or 15, comprising the additional steps of:
- determining by an image analysis algorithm whether the quality of one or more images acquired by the image sensor is/are above a given threshold to ensure that the image of the position-encoded pattern is good enough to be used by the optical stylus, and
- adapting the distance-to-voltage conversion model when the quality is below said given threshold to modify the focal length of the dynamic optical element so as to restore the quality of said one or more images above said given threshold.

17. The method according to any of claims 14 to 16, wherein the processing unit corrects in real time the signal acquired by the distance measurement sensor (44) as a function of the tilt angle (φ) and the roll angle (ψ) of the 3D pose of the optical stylus (20) relative to the position-encoded surface (50) to compute the working distance (WD).

18. The method according to claim 17, wherein said working distance (*WD*) is obtained by executing by the processing unit the following equation: $WD = \left({D}_{M}⋅\frac{r}{\sqrt{{r}^{2} + {L}_{o}^{2}}}-r\right) \left(\frac{Lo}{r}+cosψ⋅tanφ\right)$ wherein
D_{M} is the distance measured by the distance measurement sensor (44),
*Lo* is the distance between the distance measurement sensor and the outer surface of the object lens (32) along the optical axis (*O*) of the stylus,
*r* is the orthogonal distance between the optical axis (*O*) of the optical stylus and the position of the distance measurement sensor (44),
φ and ψ are respectively the tilt and the roll angles of the optical stylus.

## Patentansprüche

1. Optisches System (30) für ein Positionsbestimmungsgerät (20), insbesondere einen optischen Stift (20), zur Bestimmung der Position dieses Geräts (20) relativ zu einer positionskodierten Oberfläche (50) mit unterschiedlichen positionskodierten Mustern (52), wobei das optische System (30) einen Bildsensor (31) zur Aufnahme von mindestens einem Bild eines beliebigen positionskodierten Musters (52) der positionskodierten Oberfläche (50), eine oder mehrere Lichtquellen (42) zur Beleuchtung eines beliebigen dieser positionskodierten Muster, eine Blendenöffnung (48), eine Objektivlinse (32) mit einer Seite, die durch eine erste Distanz (*d1*) von der Blendenöffnung entfernt ist, und eine Bildlinse (34) mit einer Seite, die durch eine zweite Distanz (*d2*) von der Blendenöffnung (48) entfernt ist, umfasst, wobei das optische System (30) ferner ein dynamisches optisches Element (36) aufweist, das elektrisch ansteuerbar ist, um auf dem Bildsensor (31) scharfe Bilder eines beliebigen positionskodierten Musters (52) der positionskodierten Oberfläche (50) innerhalb der Arbeitsabstände des Positionsbestimmungsgeräts (20), das das genannte optische System (30) umfasst, zu erzeugen, **dadurch gekennzeichnet, dass** das dynamische optische Element (36) in Kontakt mit der Blendenöffnung (48) oder innerhalb eines Abstands von 5 mm von der Blendenöffnung entlang der optischen Achse (O) des optischen Systems (30) positioniert ist, und dass die erste Distanz (*d1*) in einem Bereich von 0.5 bis 1.2 der Brennweite der Objektivlinse (32) liegt.

2. Das optische System (30) nach Anspruch 1, wobei der Bereich der genannten Arbeitsabstände einen Minimalwert von 10 mm und einen Maximalwert von 100 mm aufweist.

3. Das optische System (30) nach Anspruch 2, wobei das Verhältnis der Vergrößerung des optischen Systems zwischen dem auf dem Bildsensor (31) gebildeten scharfen Bild, wenn das Positionsbestimmungsgerät (20) die Minimal- und Maximalwerte des genannten Bereichs einnimmt, unter 3 liegt.

4. Das optische System (30) nach einem beliebigen der vorangehenden Ansprüche, vom Typ eines doppelten telezentrischen Systems, wobei der genannte erste Abstand (*d1*) gleich der Brennweite der Objektivlinse (32) ist, während der genannte zweite Abstand (*d2*) gleich der Brennweite der Bildlinse (34) ist.

5. Das optische System (30) nach einem beliebigen der Ansprüche 1 bis 3, wobei das optische System (30) vom Typ eines objektseitig telezentrischen Systems ist, wobei der genannte erste Abstand (*d1*) gleich der Brennweite der Objektivlinse (32) ist.

6. Das optische System (30) nach einem beliebigen der Ansprüche 1 bis 3, wobei die genannte erste Distanz (*d1*) kürzer ist als die Brennweite der Objektivlinse (32), und wobei die genannte zweite Distanz (*d2*) kürzer ist als die Brennweite der Bildlinse (34).

7. Das optische System (30) nach Anspruch 6, wobei die genannte erste Distanz (*d1*) mindestens um den Faktor 1.5 kürzer ist als die Brennweite der Objektivlinse (32) und wobei die genannte zweite Distanz (*d2*) mindestens um den Faktor 2 kürzer ist als die Brennweite der Bildlinse (34).

8. Das optische System (30) nach einem beliebigen vorangehenden Anspruch, welches ferner eine Leiterplatte (46) umfasst, wobei das dynamische optische Element (36) eine elektroverstellbare Linse (ETL), z. B. eine Flüssig- oder Polymerlinse, ist, die an einer Seite der Leiterplatte (46) montiert ist, wobei genannte Leiterplatte die Blendenöffnung (48) umfasst.

9. Das optische System (30) nach einem beliebigen vorangehenden Anspruch, welches ferner einen Abstandssensor (44) umfasst, z. B. einen optischen Time-of-Flight-Sensor, der zwischen dem dynamischen optischen Element (36) und der Objektivlinse (32) angebracht ist.

10. Das optische System (30) nach dem vorhergehenden Anspruch, das ferner mit einen optischen Filter (35) umfasst, der so angeordnet ist, dass er das von den Lichtquellen emittierte Licht zum Bildsensor (31) passieren lässt und das von dem Abstandssensor (44) emittierte Licht daran hindert, den Bildsensor (31) zu erreichen, oder dieses Licht zumindest abschwächt, bevor es den Bildsensor erreicht.

11. Das optische System (30) nach einem beliebigen der vorhergehenden Ansprüche, wobei die eine oder mehrere Lichtquellen (42) so angeordnet ist/sind, dass die Mittelachse des von der oder jeder Lichtquelle ausgesandten Lichtkegels die optische Achse (*O*) der Objektivlinse (32) schneidet, um eine optimale Beleuchtungsintensität zu erzielen.

12. Optischer Stift (20), der das optische System (30) nach einem beliebigen der vorstehenden Ansprüche umfasst.

13. Der optische Stift (20) nach dem vorstehenden Anspruch, wobei die genannten eine oder mehrere Lichtquellen (42) zwischen dem genannten dynamischen optischen Element (36) und der Objektivlinse (32) angebracht ist/sind.

14. Verfahren zur Steuerung der an ein dynamisches optisches Element (36) eines optischen Stifts (20) anzulegenden Spannung als Funktion der 3D-Lage des optischen Stifts (20) relativ zu einer positionskodierten Oberfläche (50), die verschiedene, positionskodierte Muster (52) aufweist, wobei der optische Stift umfasst:
- ein Bildsensor (31) zum Erfassen mindestens eines Bildes eines beliebigen positionskodierten Musters (52) der positionskodierten Oberfläche (50),
- ein dynamisches optisches Element (36), das elektrisch angesteuert werden kann, um auf dem Bildsensor (31) scharfe Bilder eines beliebigen positionskodierten Musters (52) der positionskodierten Oberfläche (50) innerhalb eines Bereichs von Arbeitsabständen des optischen Stifts zu bilden,
- ein Abstandssensor (44) zur Messung eines Abstands (D_{M}), und
- eine Recheneinheit zur Steuerung des dynamischen optischen Elements (36) in Abhängigkeit von einer mittels des genannten Abstands (D_{M}) bestimmten Arbeitsabstands (WD),
wobei das Verfahren die folgenden Schritte umfasst:
a. Durchführung einer Messung des genannten Abstands (D_{M}) mit dem Abstandssensor (44);
b. Bestimmen der elektrischen Spannung, die am dynamischen optischen Element (36) anzulegen ist, mittels eines Abstand-zu-Spannungs-Umrechnungsmodells unter Verwendung eines der folgenden:
- ein analytisches Modell, das das Verhältnis zwischen der anzulegenden Spannung und dem genannten Arbeitsabstand (WD) beschreibt, oder
- eine Nachschlagetabelle, die den Wert der anzulegenden Spannung für jede Messung des genannten Arbeitsabstands (WD) speichert.

15. Verfahren nach dem vorangehenden Anspruch, wobei Schritt a) von den zusätzlichen Schritten gefolgt wird:
c. Erhalten mindestens einer Messung, die von einem anderen Sensor durchgeführt wurde, wie beispielsweise dem Bildsensor (31) oder einem IMU-Sensor (45), der im optischen Stift enthalten ist, und,
d. Ausführen auf der Recheneinheit eines Sensor-Fusionsalgorithmus, wie etwa eines Kalman-Filters, um den genannten Arbeitsabstand (*WD*) basierend auf den vom Abstandssensor (44) und dem genannten anderen Sensor erhaltenen Daten genauer zu bestimmen.

16. Verfahren nach Anspruch 14 oder 15, umfassend die zusätzlichen Schritte:
- Bestimmen, durch einen Bildanalysealgorithmus, ob die Qualität eines oder mehrerer vom Bildsensor (31) aufgenommener Bilder über einem vorgegebenen Schwellenwert liegt, um sicherzustellen, dass das Bild des positionskodierten Musters ausreichend gut ist, um vom optischen Stift verwendet zu werden, und
- Anpassen des Abstand-zu-Spannungs-Umrechnungsmodells, wenn die Qualität unter dem genannten Schwellenwert liegt, um die Brennweite des dynamischen optischen Elements (36) so zu ändern, sodass die Qualität der genannten ein oder mehrerer Bilder wieder über dem genannten Schwellenwert liegt.

17. Verfahren nach einem der Ansprüche 14 bis 16, wobei die Recheneinheit das vom Abstandssensor (44) gewonnene Signal in Echtzeit in Abhängigkeit vom Neigungswinkel (φ) und dem Rollwinkel (ψ) der 3D-Pose des optischen Stifts (20) relativ zur positionskodierten Oberfläche (50) korrigiert, um den Arbeitsabstand (WD) zu berechnen.

18. Verfahren nach Anspruch 17, wobei der genannte Arbeitsabstand (WD) von der Recheneinheit durch Ausführung der folgenden Gleichung berechnet wird: $WD = \left({D}_{M}⋅\frac{r}{\sqrt{{r}^{2} + {L}_{o}^{2}}}-r\right) \left(\frac{Lo}{r}+cosψ⋅tanφ\right)$ wobei
D_{M} der vom Abstandssensor (44) gemessene Abstand ist,
*Lo* der Abstand zwischen dem Abstandssensor und der Außenfläche der Objektivlinse (32) entlang der optischen Achse (*O*) des optischen Stifts ist,
*r* der orthogonale Abstand zwischen der optischen Achse (*O*) des optischen Stifts und der Position des Abstandssensors (44) ist,
φ und ψ jeweils die Kipp- und Roll-winkel des optischen Stifts sind.

## Revendications

1. Système optique (30) destiné à un dispositif de détermination de position (20), en particulier un stylet optique, pour la détermination de la position dudit dispositif (20) par rapport à une surface codée en position (50) présentant différents motifs codés en position (52), le système optique (30) comprenant un capteur d'image (31) pour capturer au moins une image de n'importe quel motif codé en position (52) de la surface codée en position (50), une ou plusieurs sources lumineuses (42) pour illuminer l'un quelconque de ces motifs codés en position, une ouverture d'arrêt (48), une lentille objet (32) avec un côté éloigné de l'ouverture d'arrêt d'une première distance (*d1*) et une lentille image (34) avec un côté éloigné de l'ouverture d'arrêt (48) d'une seconde distance (*d2*), le système optique (30) comprenant en outre un élément optique dynamique (36) configuré pour être activé électriquement afin de former sur le capteur d'image (31) des images nettes de n'importe quel motif codé en position (52) de la surface codée en position (50) dans des distances de travail du dispositif de détermination de position (20) comprenant ledit système optique (30), **caractérisé en ce que** ledit élément optique dynamique (36) est positionné en contact avec l'ouverture d'arrêt (48) ou à une distance de 5 mm au plus de l'ouverture d'arrêt le long de l'axe optique (O) du système optique (30) et **en ce que** la première distance (*d1*) est comprise dans une plage allant de 0,5 à 1,2 fois la longueur focale de la lentille objet (32).

2. Le système optique (30) selon la revendication 1, dans lequel la plage de ces distances de travail a une valeur minimale de 10 mm et une valeur maximale de 100 mm.

3. Le système optique (30) selon la revendication 2, dans lequel le rapport de grossissement du système optique entre l'image nette formée sur le capteur d'image (31), lorsque le dispositif de détermination de position (20) est aux valeurs minimale et maximale de ladite plage, est inférieur à 3.

4. Système optique (30) selon l'une quelconque des revendications précédentes, de type double-télécentrique, dans lequel ladite première distance (*d1*) est égale à la longueur focale de la lentille objet (32) tandis que ladite seconde distance (*d2*) est égale à la longueur focale de la lentille image (34).

5. Système optique (30) selon l'une quelconque des revendications 1 à 3, dans lequel le système optique (30) est du type télécentrique en espace objet, dans lequel ladite première distance (*d1*) est égale à la longueur focale de la lentille objet (32).

6. Système optique (30) selon l'une quelconque des revendications 1 à 3, dans lequel ladite première distance (*d1*) est plus courte que la longueur focale de la lentille objet (32), et dans lequel ladite seconde distance (*d2*) est plus courte que la longueur focale de la lentille image (34).

7. Système optique (30) selon la revendication 6, dans lequel ladite première distance (*d1*) est au moins 1,5 fois plus courte que la longueur focale de la lentille objet (32) et dans lequel ladite seconde distance (*d2*) est au moins deux fois plus courte que la longueur focale de la lentille image (34).

8. Système optique (30) selon l'une quelconque des revendications précédentes, comprenant en outre un circuit imprimé (46), l'élément optique dynamique (36) étant une lentille électro-ajustable (ETL), par exemple une lentille liquide ou en polymère, qui est montée sur un côté du circuit imprimé (46), ledit circuit imprimé comprenant l'ouverture d'arrêt (48).

9. Système optique (30) selon l'une quelconque des revendications précédentes, comprenant en outre un capteur de mesure de distance (44), par exemple un capteur optique de temps de vol, monté entre l'élément optique dynamique (36) et la lentille objet (32).

10. Système optique (30) selon la revendication précédente, comprenant en outre un filtre optique (35) disposé pour permettre le passage de la lumière émise par les sources lumineuses afin d'atteindre le capteur d'image (31) et pour empêcher la lumière émise par le capteur de mesure de distance (44) d'atteindre le capteur d'image (31) ou du moins d'atténuer ladite lumière avant qu'elle n'atteigne le capteur d'image.

11. Système optique (30) selon l'une quelconque des revendications précédentes, dans lequel une ou plusieurs sources lumineuses (42) sont disposées de manière à ce que l'axe central du cône lumineux émis par ladite source ou par chacune des sources lumineuses intersecte l'axe optique (O) de la lentille objet (32) pour une intensité d'éclairage optimale.

12. Stylet optique (20) comprenant le système optique (30) selon l'une quelconque des revendications précédentes.

13. Stylet optique (20) selon la revendication précédente, dans lequel une ou plusieurs sources lumineuses (42) sont montées entre ledit élément optique dynamique (36) et la lentille objet (32).

14. Méthode de commande de la tension à appliquer sur un élément optique dynamique (36) d'un stylet optique (20) en fonction de la pose 3D du stylet optique (20) par rapport à une surface codée en position (50) comprenant différents motifs codés en position (52), le stylet optique comprenant :
- un capteur d'image (31) pour capturer au moins une image de n'importe quel motif codé en position (52) de la surface codée en position (50),
- un élément optique dynamique (36) configuré pour être actionné électriquement afin de former sur le capteur d'image (31) des images nettes de n'importe quel motif codé en position (52) de la surface codée en position (50) dans une plage de distances de travail du stylet optique,
- un capteur de mesure de distance (44) pour mesurer une distance (D_{M}), et
- une unité de traitement pour commander l'élément optique dynamique (36) en fonction d'une distance de travail (*WD*) déterminée en utilisant ladite distance (D_{M}),
la méthode comprenant les étapes suivantes :
a. effectuer une mesure de ladite distance (D_{M}) à l'aide du capteur de mesure de distance (44);
b. déterminer la tension électrique à appliquer sur l'élément optique dynamique (36) au moyen d'un modèle de conversion distance-vers-tension en utilisant soit :
- un modèle analytique décrivant la relation entre la tension à appliquer et ladite distance de travail *(WD),* ou
- une table de consultation stockant la valeur de la tension à appliquer pour chaque mesure de ladite distance de travail (*WD*)*.*

15. Méthode selon la revendication précédente, dans laquelle l'étape a. est suivie des étapes supplémentaires suivantes :
c. obtenir au moins une mesure effectuée par un autre capteur, tel que le capteur d'image (31) ou un capteur IMU (45), inclus dans le stylet optique, et
d. exécuter sur l'unité de traitement un algorithme de fusion de capteurs, tel qu'un filtre de Kalman, afin d'obtenir une détermination plus précise de ladite distance de travail (*WD*) en fonction des données obtenues par le capteur de mesure de distance (44) et ledit autre capteur.

16. Méthode selon la revendication 14 ou 15, comprenant les étapes supplémentaires suivantes :
- déterminer par un algorithme d'analyse d'image si la qualité d'une ou plusieurs images acquises par le capteur d'image est supérieure à un seuil donné afin de garantir que l'image du motif codé en position est suffisamment bonne pour être utilisée par le stylet optique, et
- adapter le modèle de conversion distance-vers-tension lorsque la qualité est inférieure audit seuil donné, afin de modifier la longueur focale de l'élément optique dynamique de façon à ramener la qualité de ladite ou desdites images au-dessus dudit seuil donné.

17. Méthode selon l'une quelconque des revendications 14 à 16, dans laquelle l'unité de traitement corrige en temps réel le signal acquis par le capteur de mesure de distance (44) en fonction de l'angle d'inclinaison (φ) et l'angle de roulis (ψ) de la pose 3D du stylet optique (20) par rapport à la surface codée en position (50) pour calculer la distance de travail (WD).

18. Méthode selon la revendication 17, dans laquelle ladite distance de travail *(WD)* est obtenue en exécutant par l'unité de traitement l'équation suivante : $WD = \left({D}_{M}⋅\frac{r}{\sqrt{{r}^{2} + {L}_{o}^{2}}}-r\right) \left(\frac{Lo}{r}+cosψ⋅tanφ\right)$ dans laquelle
D_{M} est la distance mesurée par le capteur de mesure de distance (44),
*Lo* est la distance entre le capteur de mesure de distance et la surface extérieure de la lentille objet (32) le long de l'axe optique (*O*) du stylet optique,
*r* est la distance orthogonale entre l'axe optique (*O*) du stylet optique et la position du capteur de mesure de distance (44),
φ et ψ sont respectivement les angles d'inclinaison et de roulis du stylet optique.
